# EUROPEAN PATENT APPLICATION

(11) **EP 2 804 283 A2**
(43) Date of publication of application: **19.11.2014**
(21) Application number: 14167430.9
(22) Date of filing: 07.05.2014
(51) Int. Cl.: H02J 5/00

(54) **Pairing method and pairing system**

(30) Priority: 14.05.2013 JP 2013102265
(71) Applicant: Funai Electric Co., Ltd., Daito city Osaka 574-0013 (JP)
(72) Inventor: OI, Hideo, Osaka 574-0013 (JP)
(74) Representative: Osha Liang SARL

(57) **Abstract**

A method for pairing two devices (20, 30; 40, 50; 80, 90) and a pairing system (1) are provided. Each of the devices (20, 30; 40, 50; 80, 90) may be configured to receive power from a power supply device (10) and comprise a memory (23, 33; 43, 53; 83, 93). The method includes detecting non-contact power supply from the power supply device (10) to each of the two devices (20, 30; 40, 50; 80, 90), receiving the non-contact power supply and performing pairing setting of the two devices (20, 30; 40, 50; 80, 90) and storing identification information of one of the two devices (30; 50; 90) in the memory (23; 43; 83) of the other device (20; 40; 80).

## Description

### [Technical Field]

The present invention relates to a pairing method and pairing system that associate and link two devices.

### [Background of Related Art]

When two devices are used in a one-to-one relation, such as a main body device and an auxiliary device of a remote controller or the like in a set top box, the main body device and the auxiliary device may be paired. Pairing is generating a common encryption key and the main device storing identification information (for example, a Bluetooth [registered trademark] address) of the auxiliary device after establishing, for example, a Bluetooth connection between the two devices. Storing the common encryption key and the identification information of the auxiliary device enables sending and receiving information with the auxiliary device without reconfiguration in a next and subsequent Bluetooth connection and executing functions of a connected device.

However, because it is unclear in a manufacturing process which main body device is paired to which auxiliary device, a pairing setting generally needs to be set by purchasers of the device themselves and is time consuming. A manufacturer or seller of the device can perform the pairing setting immediately before packaging the main body device and the auxiliary device, but in this case, there is still a possibility that an enclosure may become scratched or dirty because setting is done by hand.

### [Related Art Documents]

### [Patent Documents]

[Patent Document 1] Japanese Unexamined Patent Application Publication No. 2003-69458

A technique of pairing without contact by setting a communication mode from an external base station is disclosed in Patent Document 1, but this is time consuming because the communication mode needs to be set from the external base station.

### [Summary of the Invention]

In one or more embodiments of the present invention, a pairing method and a pairing system pair two devices without requiring much time and without contact.

In one or more embodiments, a method for pairing two devices, each of which may be configured to receive power from a power supply device and comprise a memory, may comprise detecting non-contact power supply from the power supply device, receiving the non-contact power supply and performing pairing setting of the two devices, and storing identification information of one of the two devices in the memory of the other device. For example, detecting non-contact power supply may comprise detecting non-contact power supply from the power supply to each of the two devices.

The power supply device may include one or two power supply elements. For example, a single power supply element may be included in a pairing system which may also include the two devices. Alternatively, the power supply device may include two power supply elements. For example, the two power supply elements may be included in a pairing system which may also include the two devices.

In one or more embodiments, when two power supply elements are provided, detecting non-contact power supply may be performed from a respective power supply element of the power supply device.

In one or more embodiments, detecting non-contact power supply may comprise detecting non-contact power supply from a respective power supply element of the power supply device to each of the two devices.

Each of the two devices may include a power receiving element. In this case, in one or more embodiments, detecting non-contact power supply may comprise detecting non-contact power supply from a respective power supply element of the power supply device to a corresponding power receiving element of the two devices.

In one or more embodiments, non-contact power supply may trigger pairing setting.

In one or more embodiments, pairing setting is performed once the non-contact power supply is received. For example, pairing setting may be performed once the non-contact power supply is received by the two devices. However, pairing setting may be performed, for example, in response to a signal. For example, a signal serving as a trigger for performing pairing setting may be superimposed, for example, on high-frequency power of non-contact power supply.

In one or more embodiments, performing pairing setting of the two devices may comprise executing software configured to perform pairing setting. For example, by executing the software configured to perform pairing setting, information identifying one of the two devices may be obtained. For example, information identifying one of the two devices may be previously stored in the memory of the respective device.

In one or more embodiments, the method may further comprise outputting the identification information of the one device to the other device via the power supply device to store the identification information of the one device in the memory of the other device.

Furthermore, in the pairing method according to one or more embodiments of the present invention, each of the two devices may further comprise a wireless communication part, such as, for example, a wireless terminal. In this case, the method may further comprise outputting the identification information of the one device to the other device over wireless communication by the wireless communication part to store the identification information of the one device in the memory of the other device.

Furthermore, in one or more embodiments of the present invention, each of the two devices may further comprise the wireless communication part, and the method may further comprise outputting the identification information of the one device to the other device over wireless communication by the wireless communication part via an external wireless communication device to store the identification information of the one device in the memory provided by the other device.

Furthermore, in one or more embodiments of the present invention, two devices that perform pairing setting may further comprise the wireless communication part, and the method may further comprise outputting the identification information of the one device to the other device over wireless communication by the wireless communication part via an external wireless communication device to store the identification information of the one device in the memory provided by the other device.

Furthermore, in one or more embodiments of the present invention, the method may further comprise extracting identification information of the power supply device and searching for a device having the identification information of the power supply device, wherein between the two devices having the identification information of the power supply device, the identification information of the one device is stored in the memory of the other device.

A pairing system of one or more embodiments of the present invention may comprise a power supply device. Further, the pairing system may further comprise a first device and a second device, each configured to perform pairing setting. The first device may comprise a first power receiving element configured to receive non-contact power supply from the power supply device, and a first controller configured to obtain identification information of the first device and to detect power supply to the first power receiving element to perform the pairing setting. The second device may comprise a second power receiving element configured to receive non-contact power supply from the power supply device, a second controller configured to detect power supply to the second power receiving element to perform the pairing setting, and a memory configured to store the identification information of the first device obtained by the second controller from the first controller.

A pairing system of one or more embodiments of the present invention may comprise a power supply device which may include a first power supply element and a second power supply element. Further, the pairing system may further comprise a first device and a second device, each configured to perform pairing setting. The first device may comprise a first power receiving element configured to receive non-contact power supply from the first power supply element, and a first controller configured to obtain identification information of the first device and to detect power supply to the first power receiving element to perform the pairing setting. The second device may comprise a second power receiving element configured to receive non-contact power supply from the second power supply element, a second controller configured to detect power supply to the second power receiving element to perform the pairing setting, and a memory configured to store the identification information of the first device obtained by the second controller from the first controller.

Furthermore, in one or more embodiments of the present invention, the first device may further comprise a memory. In such a case, the first controller may be further configured to obtain identification information of the first device from the memory of the first device.

Furthermore, in one or more embodiments of the present invention, the first controller may be configured to input the identification information of the first device. Further, the power supply device may be configured to output the input identification information of the first device to the second controller.

Furthermore, in one or more embodiments of the present invention, the first device and the second device may each comprise a wireless communication part. The first controller may be configured to output the identification information of the first device to the second controller over wireless communication by the wireless communication part.

Furthermore, in one or more embodiments of the present invention, the first device and the second device may each comprise a wireless communication part, and the first controller may be configured to output the identification information of the first device to the second controller over wireless communication by the wireless communication part via an external wireless communication device.

For example, each of the wireless communication parts of the first device and the second device may be a wireless terminal.

Furthermore, in one or more embodiments of the present invention, the first controller and the second controller may be each configured to extract identification information of the power supply device. The first controller may be configured to output the identification information of the first device to the second controller having the identification information of the power supply device.

In one or more embodiments of the present invention, the power supply device may comprise a coil. When the power supply device comprises a first and a second power supply element, each power supply element may be a coil.

In one or more embodiments of the present invention, each of the first power receiving element and of the second power receiving element may be an antenna.

According to one or more embodiments of the present invention, the non-contact power supply may trigger a pairing setting in two devices. In paring setting, one device outputs the identification information of its own device to another device, and the latter device stores the identification information. Pairing setting is thereby completed. Because this pairing setting may be executed by starting non-contact power supply, pairing setting can be easily executed not only before but also after the two devices are packaged into one case.

### [Brief Description of Drawings]

FIG. 1 is a diagram illustrating a pairing system of one or more embodiments of a first example of the present invention.
FIG. 2 is a flowchart illustrating a process of pairing in the pairing system of one or more embodiments of the first example.
FIG. 3 is a diagram illustrating a pairing system of one or more embodiments of a second example of the present invention.
FIG. 4 is a flowchart illustrating a process of pairing in the pairing system of one or more embodiments of the second example.
FIG. 5 is a diagram illustrating a pairing system of one or more embodiments of a third example of the present invention.
FIG. 6 is a flowchart illustrating a process of pairing in the pairing system of one or more embodiments of the third example.
FIG. 7 is a flowchart illustrating a process of pairing in a pairing system of one or more embodiments of a fourth example of the present invention.

### [Detailed Description of Embodiments]

### (First Example)

Embodiments of a pairing method and pairing system will be described below with reference to drawings. One or more embodiments of the present invention illustrate examples of the pairing method and the pairing system for embodying a technical concept of the present invention and are not meant to specify the present invention to these pairing methods and pairing systems, being equally applicable to pairing methods and pairing systems of other embodiments included in the scope of patent claims.

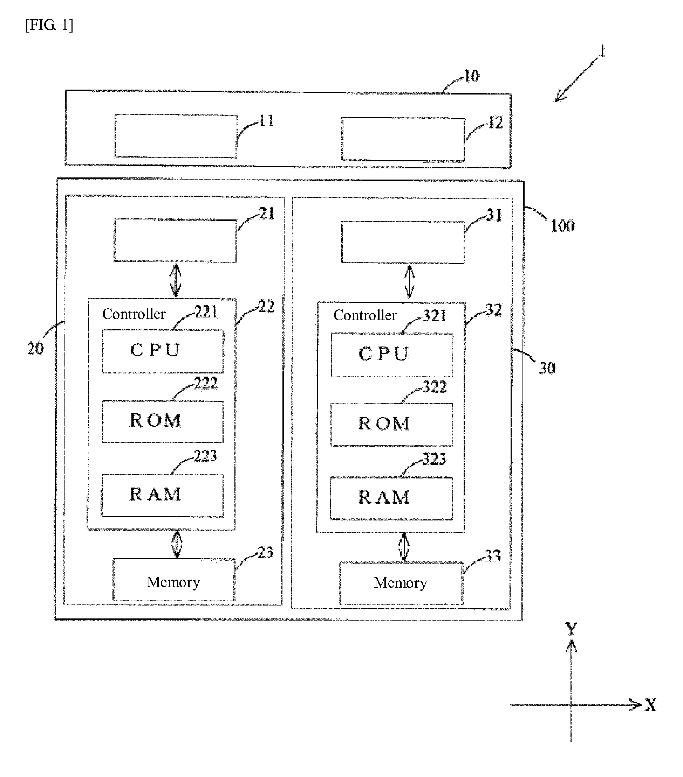

FIG. 1 is a diagram illustrating the pairing system of one or more embodiments of first example of the present invention. A pairing system 1 of one or more embodiments of the present invention comprises a power supply device 10, which may include two power supply elements (exemplary details described below), a main body device 20 and an auxiliary device 30, each comprising power receiving elements, for example an antenna, (exemplary details described below). In the embodiment of Fig. 1, the main body device 20 and an auxiliary device 30 are packaged in a case 100. The power supply device 10 comprises power supply elements 11 and 12. Materials and shapes of the power supply elements 11, 12 are not limited in particular. As an example, each of the power supply elements 11, 12 may comprise a coil module having a shape that spirals toward a center of a spiral in a top surface view.

The main body device 20 may be, for example, a main body in a set top box, and the auxiliary device 30 may be, for example, a device such as a remote controller or a headset in the set top box. The main body device 20 and the auxiliary device 30 comprise power receiving elements 21,31 that correspond to the power supply elements 11 and 12, respectively.

When AC power is supplied to the power supply elements 11, 12, an alternating magnetic field is generated in a direction perpendicular to a power supply surface (a y-axis direction in FIG. 1). An induced current is excited in the power receiving element 21, 31 brought near the power supply elements 11, 12 by this alternating magnetic field, transmitting power. Moreover, it is possible to send and receive information by superimposing various types of information on high-frequency power of a non-contact power supply using a frequency (communication frequency) that differs from the high-frequency power of the non-contact power supply. The power supply elements 11, 12 and the power receiving elements 21, 22, in addition to sending and receiving power, function as a communication part that can communicate with a power supply source or a power supply destination.

The main body device 20 may further comprise a controller 22 and a memory 23, such as for example a flash ROM. The controller 22 may be a control means for controlling the entire main body device 20. The controller 22 includes a CPU 221, a ROM 222, and a RAM 223. The ROM 222 stores software and programs executed by the controller 22 and parameters and data needed to execute the software and the programs. The CPU 221 executes the various types of software and programs stored in the ROM 222. The RAM 223 temporarily stores data obtained during various types of processes and data obtained as a result of the various types of processes. The CPU 221, the ROM 222, the RAM 223, and the like are connected via a bus. A portion or an entirety of the CPU 221, the ROM 222, and the RAM 223 may be integrated into one chip.

In one or more embodiments of the present invention, software for performing pairing setting is stored in the ROM 222. When the software for performing pairing setting is started (executed), a process for pairing setting with another device is executed.

Specifically, the CPU 221 of the controller 22 executes the software for performing pairing setting stored in the RAM 222 when non-contact power supply between the power receiving element 21 and the power supply element 11 begins. Information, such as identification information of the auxiliary device 30 that will be described below, obtained by executing the software for performing pairing setting may be stored in the memory 23.

The auxiliary device 30 further comprises a controller 32 and a memory 33, such as for example a flash ROM. The controller 32 may be a control means for controlling the entire auxiliary device 30. The controller 32 includes a CPU 321, a ROM 322, and a RAM 323. The ROM 322 stores software and programs executed by the controller 22 and parameters and data needed to execute the software and the programs. The CPU 321 executes the various types of software and programs stored in the ROM 322. The RAM 323 temporarily stores data obtained during various types of processes and data obtained as a result of the various types of processes. The CPU 321, the ROM 322, the RAM 323, and the like are connected via a bus. A portion or an entirety of the CPU 321, the ROM 322, and the RAM 323 may be integrated into one chip.

In one or more embodiments of the present invention, software for performing pairing setting is stored in the ROM 322. When the software for performing pairing setting is started (executed), a process for pairing setting with another device is executed.

Specifically, the CPU 321 of the controller 32 executes the software for performing pairing setting stored in the RAM 322 when non-contact power supply between the power receiving element 31 and the power supply element 12 begins. Identification information of the auxiliary device 30 may be stored in the memory 33. According to one or more embodiments, the stored identification information of the auxiliary device 30 may comprise, for example, a manufacture lot number.

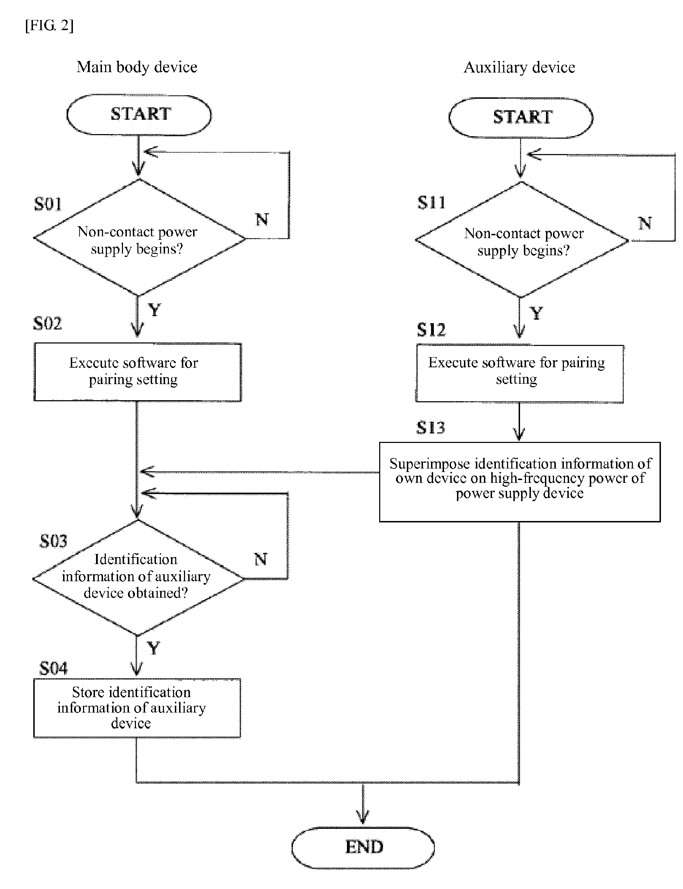

An exemplary process from start to end of the pairing setting in the pairing system 1 according to one or more embodiments of the present invention will be described below with reference to FIG. 2. FIG. 2 is a flowchart illustrating an exemplary process leading to pairing completion.

In steps S01, S11, the controllers 22, 32 determine respectively whether non-contact power supply has begun. If non-contact power supply has begun (Y at steps S01, S11), the process proceeds to steps S02, S12, and if non-contact power supply has not begun, the process returns to steps S01, S11. When the main body enclosure 20 and the auxiliary device 30 are packaged in the case 100, starting non-contact power supply may supply power to the controllers 22, 32 and start the process in FIG. 2. In this case, the process at and after steps S02, S12 may be performed without performing the determination at steps S01, S11.

At steps S02, S12, the CPUs 221, 321 of the controllers 22, 32 execute the software for pairing setting. In step S13, the controller 32 obtains identification information of its own device 30 from the memory 33 and superimposes this information on high-frequency power of the power supply device 10. The identification information of the auxiliary device 30 superimposed on high-frequency power is output to the controller 22 via non-contact power supply between the power supply element 11 and the power receiving element 21.

In step S03, it is determined whether the controller 22 obtained the identification information of the auxiliary device 30. If the identification information of the auxiliary device 30 has been obtained (Y at step S03), the process proceeds to step S04 and stores the identification information of the auxiliary device 30 in the memory 23. Pairing setting is thereby completed, and in the next and subsequent times, the auxiliary device 30 can be used with the main body device 20 without requiring pairing setting.

According to one or more embodiments of the present invention, the software for performing pairing setting is executed in two devices that are objects of pairing setting with non-contact power supply as a trigger. When the software is executed, one device outputs the identification information of its own device to another device, and the latter device stores the identification information. Pairing setting is thereby completed. Because this pairing setting is executed by starting non-contact power supply, pairing setting can be easily executed not only before but also after the two devices are packaged into one case.

### (Second Example)

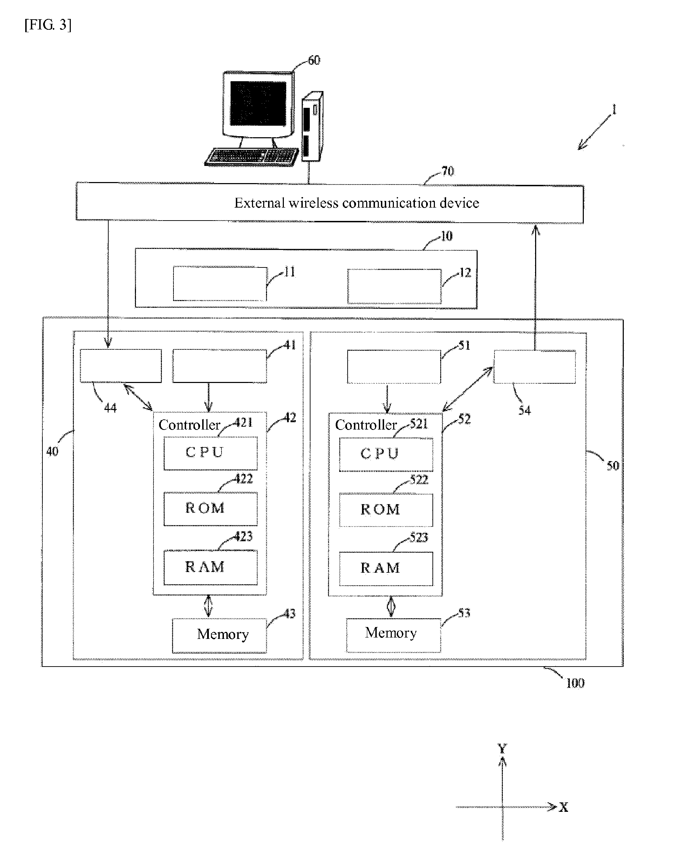

FIG. 3 is a diagram illustrating a pairing system of one or more embodiments of the present invention. In the first example, the power supply element and the power receiving element functioned as the communication part. In one or more embodiments of the second example, a main body device and an auxiliary device each comprise a communication part.

A pairing system 1 of one or more embodiments of second example of the present invention comprises a power supply device 10 which may include power supply elements (exemplary details described below), a main body device 40 and an auxiliary device 50 including respective power receiving elements (exemplary details described below) and packaged in a case 100, and an external wireless communication device 70 connected to a ROM writer (personal computer) 60. The power supply device 10 comprises power supply elements 11 and 12. Materials and shapes of the power supply elements 11, 12 are not limited in particular. For example, a coil module having a shape that spirals toward a center of a spiral in a top surface view may be used.

The main body device 40 is, for example, a main body in a set top box, and the auxiliary device 50 is, for example, a device such as a remote controller or a headset in the set top box. The main body device 40 and the auxiliary device 50 have power receiving elements 41, 51 that correspond to the power supply elements 11 and 12, respectively.

When AC power is supplied to the power supply elements 11, 12, an alternating magnetic field is generated in a direction perpendicular to a power supply surface (a y-axis direction in FIG. 3). An induced current is excited in the power receiving element 41, 51 brought near the power supply elements 11, 12 by this alternating magnetic field, transmitting power.

The main body device 40 further comprises a controller 42, a memory 43 such as a flash ROM, and a communication part 44. The controller 42 may be a control means for controlling the entire main body device 40. The controller 42 includes a CPU 421, a ROM 422, and a RAM 423. The ROM 422 stores software and programs executed by the controller 42 and parameters and data needed to execute the software and the programs. The CPU 421 executes the various types of software and programs stored in the ROM 422. The RAM 423 temporarily stores data obtained during various types of processes and data obtained as a result of the various types of processes. The CPU 421, the ROM 422, the RAM 423, and the like are connected via a bus. A portion or an entirety of the CPU 421, the ROM 422, and the RAM 223 may be integrated into one chip.

In one or more embodiments of the present invention, software for performing pairing setting is stored in the ROM 422. When the software for performing pairing setting is started (executed), a process for pairing setting with another device is executed.

Specifically, the CPU 421 of the controller 42 executes the software for performing pairing setting stored in the RAM 422 when non-contact power supply between the power receiving element 41 and the power supply element 11 begins. Information (identification information of the auxiliary device 50 that will be described below) obtained by executing the software for performing pairing setting is stored in the memory 43. The communication part 44 sends and receives information with the external wireless communication device 70 that will be described below.

The auxiliary device 50 further comprises a controller 52, a memory 53 such as a flash ROM, and a communication part 54. The controller 52 may be a control means for controlling the entire auxiliary device 50. The controller 52 comprises a CPU 521, a ROM 522, and a RAM 523. The ROM 522 stores software and programs executed by the controller 52 and parameters and data needed to execute the software and the programs. The CPU 521 executes the various types of software and programs stored in the ROM 522. The RAM 523 temporarily stores data obtained during various types of processes and data obtained as a result of the various types of processes. The CPU 521, the ROM 522, the RAM 523, and the like are connected via a bus. A portion or an entirety of the CPU 521, the ROM 522, and the RAM 523 may be integrated into one chip.

In one or more embodiments of the present invention, software for performing pairing setting is stored in the ROM 522. When the software for performing pairing setting is started (executed), a process for pairing setting with another device is executed.

Specifically, the CPU 521 of the controller 52 executes the software for performing pairing setting stored in the RAM 522 when non-contact power supply between the power receiving element 51 and the power supply element 12 begins. Identification information of the auxiliary device 50 is stored in the memory 53. As the identification information of the auxiliary device 50 stored in one or more embodiments of the present invention, a manufacture lot number, a Bluetooth address, a MAC address, and an IP address are illustrated. The communication part 54 sends and receives information with the external wireless communication device 70 that will be described below.

The ROM writer 60 is an information processing device such as a personal computer, and the external wireless communication device 70 is connected to the ROM writer 60. The ROM writer 60 and the communication part 44, 54 are connected by wireless communication such as Bluetooth, Wi-Fi (registered trademark), or P2P, and the communication parts 44 and 54 send and receive information via the external wireless communication device 70.

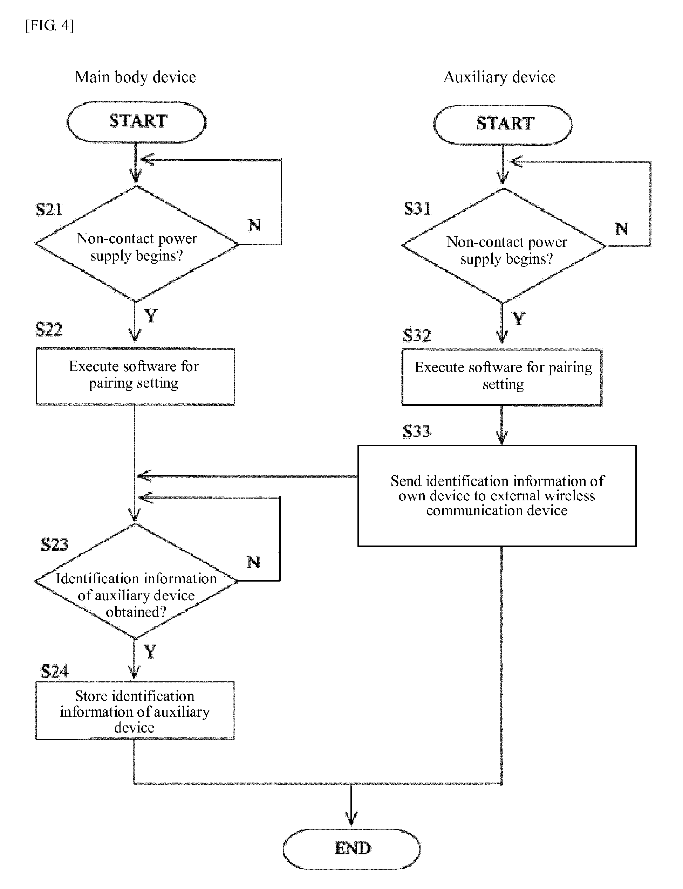

A process from when pairing setting starts to when pairing setting ends in the pairing system 1 of one or more embodiments of the present invention will be described below with reference to FIG. 4. FIG. 4 is a flowchart illustrating an exemplary process leading to pairing completion.

In steps S21, S31, the controllers 42, 52 determine respectively whether non-contact power supply has begun. If non-contact power supply has begun (Y at steps S21, S31), the process proceeds to steps S22, S32, and if non-contact power supply has not begun, the process returns to steps S21, S31. In a situation where the main body enclosure 40 and the auxiliary device 50 are packaged in the case 100, because starting non-contact power supply supplies power to the controllers 42, 52 and starts the process in FIG. 4, in this situation, the process at and after steps S22, S32 may be performed without performing the determination at steps S21, S31.

At steps S22, S32, the CPUs 421, 521 of the controllers 42, 52 execute the software for pairing setting. In step S33, the controller 52 obtains identification information of its own device from the memory 53 and sends this information to the external wireless communication device 70 via the communication part 54. The identification information of the auxiliary device 50 sent to the external wireless communication device 70 is stored in the ROM writer 60 and, further, output to the controller 42 via the external wireless communication device 70 and the communication part 44.

It is determined in step S23 whether the controller 42 obtained the identification information of the auxiliary device 50. If the identification information of the auxiliary device 50 has been obtained (Y at step S23), the process proceeds to step S24 and stores the identification information of the auxiliary device 50 in the memory 43. Pairing setting is thereby completed, and in the next and subsequent times, the auxiliary device 50 can be used with the main body device 40 without requiring pairing setting.

According to one or more embodiments of the present invention, the same effects as one or more embodiments of the first example may be exhibited.

### (Third Example)

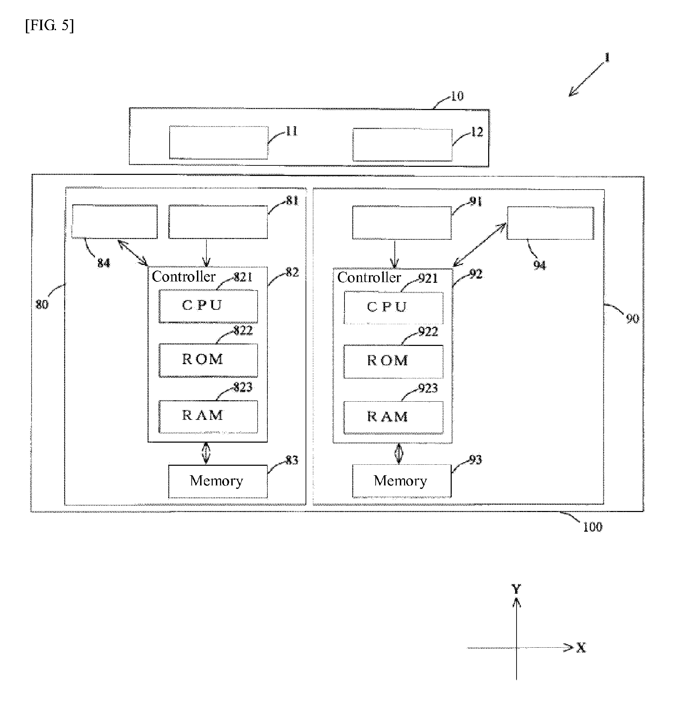

FIG. 5 is a diagram illustrating a pairing system of one or more embodiments of a third example of the present invention. In the second example, the main body device and the auxiliary device each comprises the communication part, and the identification information of the auxiliary device is sent and received via the external wireless communication device. However, a main body device and an auxiliary device may directly send and receive identification information of the auxiliary device.

A pairing system 1 of one or more embodiments of the third example of the present invention may comprise a power supply device 10 including power supply elements (exemplary details described below) and a main body device 80 and an auxiliary device 90 including respective power receiving elements (exemplary details described below) packaged in a case 100. The power supply device 10 comprises power supply elements 11 and 12. Materials and shapes of the power supply elements 11, 12 are not limited in particular. For example, a coil module having a shape that spirals toward a center of a spiral in a top surface view may be used.

The main body device 80 is, for example, a main body in a set top box, and the auxiliary device 90 is, for example, a device such as a remote controller or a headset in the set top box. The main body device 80 and the auxiliary device 90 have power receiving elements 81, 91 that correspond to the power supply elements 11 and 12, respectively.

When AC power is supplied to the power supply elements 11, 12, an alternating magnetic field is generated in a direction perpendicular to a power supply surface (a y-axis direction in FIG. 5). An induced current is excited in the power receiving element 81, 91 brought near the power supply elements 11, 12 by this alternating magnetic field, transmitting power.

The main body device 80 further comprises a controller 82, a memory 83, such as for example a flash ROM, and a communication part 84. The controller 82 may be a control means for controlling the entire main body device 80. The controller 82 includes a CPU 821, a ROM 822, and a RAM 823. The ROM 822 stores software and programs executed by the controller 82 and parameters and data needed to execute the software and the programs. The CPU 821 executes the various types of software and programs stored in the ROM 822. The RAM 823 temporarily stores data obtained during various types of processes and data obtained as a result of the various types of processes. The CPU 821, the ROM 822, the RAM 823, and the like are connected via a bus. A portion or an entirety of the CPU 821, the ROM 822, and the RAM 223 may be integrated into one chip.

In one or more embodiments of the present invention, software for performing pairing setting is stored in the ROM 822. When the software for performing pairing setting is started (executed), a process for pairing setting with another device is executed.

Specifically, the CPU 821 of the controller 82 executes the software for performing pairing setting stored in the RAM 822 when non-contact power supply between the power receiving element 81 and the power supply element 11 begins. Information (identification information of the auxiliary device 90 that will be described below) obtained by executing the software for performing pairing setting is stored in the memory 83. The communication part 84 sends and receives information with the communication part 94 that will be described below.

The auxiliary device 90 further comprises a controller 92, a memory 93 such as a flash ROM, and a communication part 94. The controller 92 may be a control means for controlling the entire auxiliary device 90. The controller 92 includes a CPU 921, a ROM 922, and a RAM 923. The ROM 922 stores software and programs executed by the controller 92 and parameters and data needed to execute the software and the programs. The CPU 921 executes the various types of software and programs stored in the ROM 922. The RAM 923 temporarily stores data obtained during various types of processes and data obtained as a result of the various types of processes. The CPU 921, the ROM 922, the RAM 923, and the like are connected via a bus. A portion or an entirety of the CPU 921, the ROM 922, and the RAM 223 may be integrated into one chip.

In one or more embodiments of the present invention, software for performing pairing setting is stored in the ROM 922. When the software for performing pairing setting is started (executed), a process for pairing setting with another device is executed.

Specifically, the CPU 921 of the controller 92 executes the software for performing pairing setting stored in the RAM 922 when non-contact power supply between the power receiving element 91 and the power supply element 12 begins. Identification information of the auxiliary device 90 is stored in the memory 93. As the identification information of the auxiliary device 90 stored in one or more embodiments of the present invention, a manufacture lot number, a Bluetooth address, a MAC address, and an IP address are illustrated. The communication part 94 sends and receives information with the communication part 84. The communication part 84 and the communication part 94 are connected by wireless communication such as Bluetooth, Wi-Fi, or P2P.

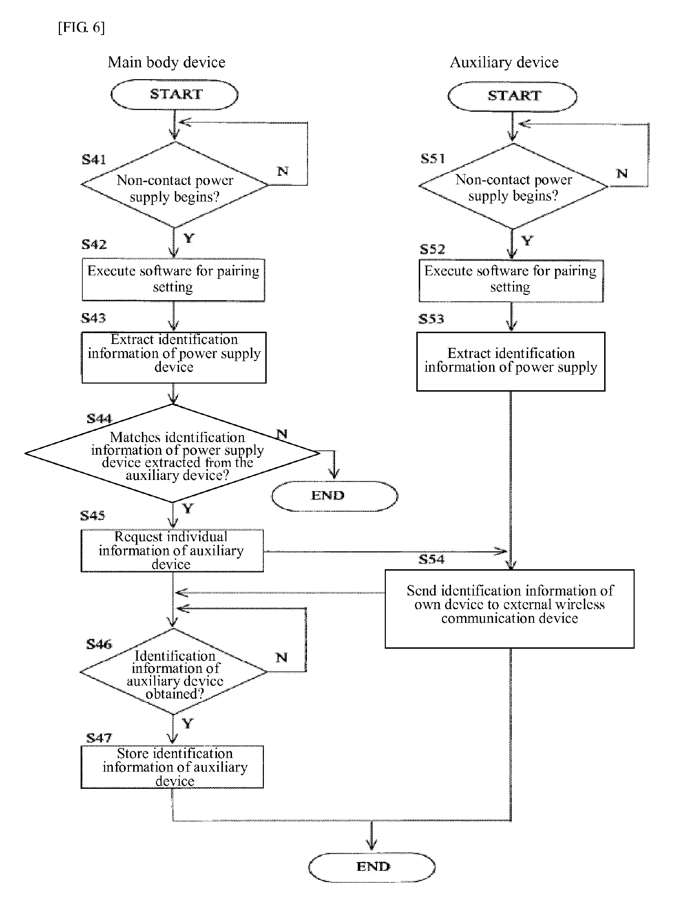

A process from start to end of the pairing setting in the pairing system 1 will be described below with reference to FIG. 6. FIG. 6 is a flowchart illustrating an exemplary process leading to pairing completion.

In steps S41, S51, the controllers 82, 92 determine respectively whether non-contact power supply has begun. If non-contact power supply has begun (Y at steps S41, S51), the process proceeds to steps S42, S52, and if non-contact power supply has not begun, the process returns to steps S41, S51. In a situation where the main body enclosure 80 and the auxiliary device 90 are packaged in the case 100, because starting non-contact power supply supplies power to the controllers 82, 92 and starts the process in FIG. 6, in this situation, the process at and after steps S42, S52 may be performed without performing the determination at steps S41, S51.

In one or more embodiments of the present invention, identification information unique to the power supply device 10 (for example, information indicating the manufacture lot number) is superimposed on high-frequency power of non-contact power supply.

At steps S42, S52, the CPUs 821, 921 of the controllers 82, 92 execute the software for pairing setting.

At steps S43, S53, the controllers 82, 92 extract the identification information of the power supply device 10 superimposed on high-frequency power of non-contact power supply.

At step S44, the controller 82 determines whether the identification information of the power supply device 10 extracted at step S43 matches the identification information of the power supply device 10 extracted by the controller 92 at step S53. If the identification information match (Y at step S44), the process proceeds to step S45, and if the identification information do not match, the process ends.

At step S45, the controller 82 requests the identification information of the auxiliary device 90 from the controller 92.

At step S54, the controller 92 obtains the identification information of its own device from the memory 93. The obtained identification information of its own device is output to the controller 82 via the communication part 94 and the communication part 84.

It is determined in step S46 whether the controller 82 obtained the identification information of the auxiliary device 90. If the identification information of the auxiliary device 90 has been obtained (Y at step S46), the process proceeds to step S47 and stores the identification information of the auxiliary device 90 in the memory 83. Pairing setting is thereby completed, and in the next and subsequent times, the auxiliary device 90 can be used with the main body device 80 without requiring pairing setting.

According to one or more embodiments of the present invention, the same effects as one or more embodiments of the first example may be exhibited.

### (Fourth Example)

In one or more embodiments of the present invention described above, the software for pairing setting is executed with starting non-contact power supply as the trigger. However, the present invention is not limited thereto and may execute software for pairing setting when a signal that serves as a trigger for executing the software for pairing setting and that is superimposed on high-frequency power of non-contact power supply is received.

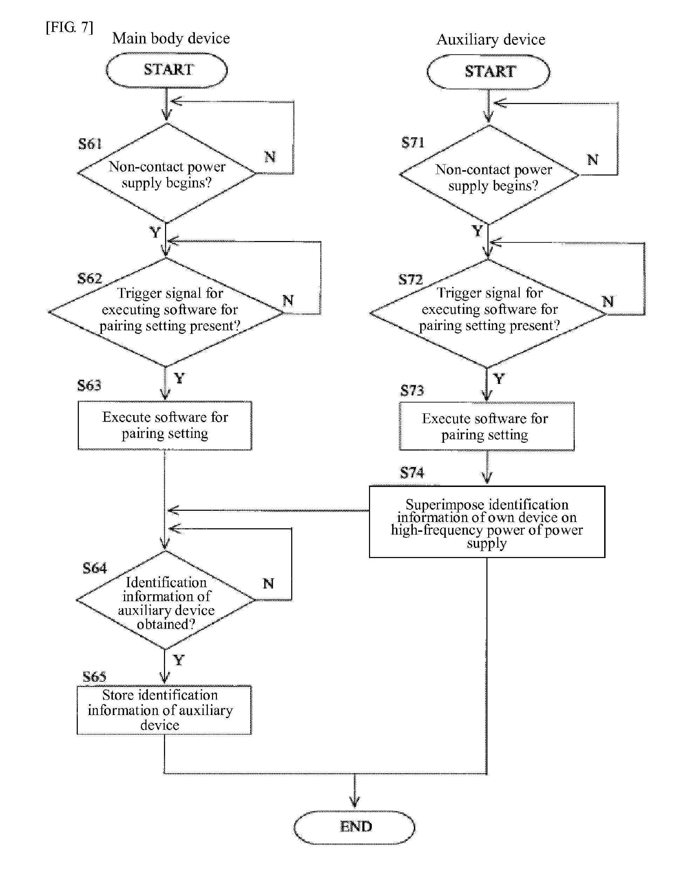

A process from start to end of a pairing setting in a pairing system 1 will be described below with reference to FIG. 7. FIG. 7 is a flowchart illustrating an exemplary process leading to pairing completion. One or more embodiments of a fourth example of the present invention will be described as a modified example of the first example but is also applicable to the second and third examples.

Steps S61, S63 to S65, S71, and S73 to S74 in the flowchart in FIG. 7 may respectively be the same as steps S01, S02 to S04, S11, and S12 to S13, and descriptions thereof will therefore be omitted.

At steps S62, S72, controllers 22, 32 determine respectively whether the signal that serves as the trigger for pairing setting is superimposed on high-frequency power of non-contact power supply. If the signal that serves as the trigger for pairing setting is superimposed on high-frequency power of non-contact power supply (Y at steps S62, S72), the process proceeds to step S63, S73, and if the signal that serves as the trigger for pairing setting is not superimposed on high-frequency power of non-contact power supply (N at steps S62, S72), the process returns to steps S62, S72.

According to one or more embodiments of the present invention, the same effects as the first example may be exhibited. Additionally, because the software for pairing setting is only executed when the signal that serves as the trigger for pairing setting is superimposed on high-frequency power of non-contact power supply, pairing setting can be executed or updated at a desired timing.

### (Fifth Example)

In the second and third examples, the identification information of the auxiliary device is sent and received by the communication part of the auxiliary device directly or indirectly communicating with the communication part of the main body device. However, if a plurality of main body devices executes software for pairing setting and/or a plurality of auxiliary devices executes the software for pairing setting, there is a possibility that the main body device and the auxiliary device that the user desires are not paired. Therefore, one or more embodiments of a fifth example of the present invention provide a pairing system that can reliably perform pairing even in such a situation.

Embodiments of the fifth example of the present invention will be described as a modified example of the third example but is of course also applicable to the first and fourth examples. In one or more embodiments of the fifth example of the present invention, a power supply device 10 superimposes a high frequency indicating identification information of the power supply device 10 on high-frequency power of non-contact power supply. Controllers 82, 92 obtain the identification information of the power supply device 10 superimposed on high-frequency power of non-contact power supply.

Furthermore, the controllers 82, 92 can search a device having the identification information of the power supply device 10 (a same identification number as an extracted identification number of the power supply device) via communication parts 84, 94. For example, the identification information of the auxiliary device 90 is stored in a memory 84 when the controller 82 searches the auxiliary device 90 as the auxiliary device having the identification information of the power supply device 10.

According to one or more embodiments of the fifth example of the present invention, the same effects as the second and third examples may be exhibited. Additionally, because objects for pairing setting are specified based on the identification information of the power supply device, pairing setting can be performed reliably even when there is the plurality of main body devices or the plurality of auxiliary devices.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

### [Explanation of Reference Numerals]

- 1: Pairing system
- 10: Power supply device
- 11, 12: Power supply element
- 20, 40, 80: Main body device
- 21, 41, 81: Power receiving element
- 22, 42, 82: Controller
- 23, 43, 83: Memory
- 30, 50, 90: Auxiliary device
- 31, 51, 91: Power receiving element
- 32, 52, 92: Controller
- 33, 53, 93: Memory
- 44, 84: Communication part
- 54, 94: Communication part
- 60: ROM writer
- 70: External wireless communication device

## Claims

1. A method for pairing two devices (20, 30; 40, 50; 80, 90), each of the devices (20, 30; 40, 50; 80, 90) being configured to receive power from a power supply device (10) and comprising a memory (23, 33; 43, 53; 83, 93), the method comprising:
detecting non-contact power supply from the power supply device (10);
receiving the non-contact power supply and performing pairing setting of the two devices (20, 30; 40, 50; 80, 90); and
storing identification information of one of the two devices (30; 50; 90) in the memory (23; 43; 83) of the other device (20; 40; 80).

2. The pairing method of claim 1, wherein detecting non-contact power supply comprises detecting non-contact power supply from a respective power supply element (11, 12) of the power supply device (10) to a corresponding power receiving element (21, 31; 41, 51; 81, 91) of the two devices (20, 30; 40, 50; 80, 90).

3. The pairing method according to claim 1 or claim 2, further comprising:
outputting the identification information of the one device (30; 50; 90) to the other device (20; 40; 80) via the power supply device (10) to store the identification information of the one device (30; 50; 90) in the memory (23; 43; 83) of the other device (20; 40; 80).

4. The pairing method according to any one of claims 1-3, wherein
each of the two devices (20, 30; 40, 50; 80, 90) further comprises a wireless communication part (44, 54; 84; 94), and
the method further comprises outputting the identification information of the one device (30; 50; 90) to the other device (20; 40; 80) over wireless communication by the wireless communication part (44, 54; 84; 94) to store the identification information of the one device (30; 50; 90) in the memory (23; 43; 83) of the other device (20; 40; 80).

5. The pairing method according to claim 4, wherein
outputting the identification information of the one device (30; 50; 90) to the other device (20; 40; 80) over wireless communication by the wireless communication part (44, 54; 84; 94) is performed via an external wireless communication device (70).

6. The pairing method according to any of claims 1 to 5, further comprising:
extracting identification information of the power supply device (10) and searching for a device having the identification information of the power supply device (10), wherein
between the two devices (20, 30; 40, 50; 80, 90) having the identification information of the power supply device (10), the identification information of the one device (30; 50; 90) is stored in the memory (23; 43; 83) of the other device (20; 40; 80).

7. Apairing system (1), comprising:
a power supply device (10);
a first device (30; 50; 90) and a second device (20; 40; 80) each configured to perform pairing setting, wherein
the first device (30; 50; 90) comprises:
a first power receiving element (31; 51; 91) configured to receive non-contact power supply from the power supply device (10); and
a first controller (32; 52; 92) configured to obtain identification information of the first device (30; 50) and to detect power supply to the first power receiving element (31; 51; 91) to perform the pairing setting; and
the second device (20; 40; 80) comprises:
a second power receiving element (21; 41; 81) configured to receive non-contact power supply from the power supply device (10);
a second controller (22; 42; 82) configured to detect power supply to the second power receiving element (21; 41; 81) to perform the pairing setting; and
a memory (23; 43; 83) configured to store the identification information of the first device (30; 50; 90) obtained by the second controller (22; 42; 82) from the first controller (32; 52; 92).

8. The pairing system (1) according to claim 7, wherein the first device (30; 50; 90) further comprises a memory (33; 53; 93) and wherein the first controller (32; 52; 92) is further configured to obtain identification information of the first device (30; 50) from the memory (33; 53; 93) of the first device (30; 50; 90).

9. The pairing system (1) according to claim 7 or claim 8, wherein:
the first controller (32; 52; 92) is configured to input the identification information of the first device (30; 50; 90), and
the power supply device (10) is configured to output the input identification information of the first device (30; 50; 90) to the second controller (22; 42; 82).

10. The pairing system (1) according to claim 7 or claim 8, wherein:
the first device (50; 90) and the second device (40; 80) each comprise a wireless communication part (54, 44; 94, 84), and
the first controller (52; 92) is configured to output the identification information of the first device (50; 90) to the second controller (42; 82) over wireless communication by the wireless communication part (54, 44; 94, 84).

11. The pairing system (1) according to claim 7 or claim 8, wherein:
the first device (50; 90) and the second device (40; 80) each comprise a wireless communication part (54, 44; 94, 84), and
the first controller (52; 92) is configured to output the identification information of the first device (50; 90) to the second controller (42; 82) over wireless communication by the wireless communication part (54, 44; 94, 84) via an external wireless communication device (70).

12. The pairing system (1) according to claim 10 or claim 11, wherein each of the wireless communication parts (54, 44; 94, 84) of the first device (50; 90) and the second device (40; 80) is a wireless terminal.

13. The pairing system (1) according to any of the claims 7 to 12, wherein:
the first controller (92) and the second controller (82) are each configured to extract identification information of the power supply device (10), and the first controller (92) is configured to output the identification information of the first device (90) to the second controller (82) having the identification information of the power supply device (10).

14. The pairing system (1) according to any one of claims 7-13, wherein each power supply element (12, 11) is a coil.

15. The pairing system (1) according to any of claims 7-14, wherein each of the first power receiving element (31; 51; 91) and of the second power receiving element (21; 41; 81) is an antenna.
